# EUROPÄISCHE PATENTSCHRIFT

(11) **EP 1 055 072 B1**
(45) Veröffentlichungstag und Bekanntmachung des Hinweises auf die Patenterteilung: **04.09.2002**
(21) Anmeldenummer: 99910191.8
(22) Anmeldetag: 04.02.1999
(51) Int. Cl.: F04B 53/10, F04B 53/12

(54) **DRUCKVENTIL, INSBESONDERE FÜR EINE KOLBENPUMPE**
PRESSURE VALVE, ESPECIALLY FOR A PISTON PUMP
SOUPAPE DE REFOULEMENT, NOTAMMENT POUR POMPE A PISTON

(30) Priorität: 09.02.1998 DE 19805099; 11.04.1998 DE 19816289
(43) Veröffentlichungstag der Anmeldung: 29.11.2000
(73) Patentinhaber: Continental Teves AG & Co. oHG, 60488 Frankfurt am Main (DE)
(72) Erfinder: BECK, Erhard, D-35781 Weilburg (DE); REINARTZ, Hans-Dieter, D-60439 Frankfurt am Main (DE); VOGEL, Günther, D-63303 Dreieich (DE)
(86) Internationale Anmeldenummer: EP9900723
(87) Internationale Veröffentlichungsnummer: WO99040323

(56) Entgegenhaltungen:
- EP-A- 0 461 808
- DE-A- 2 338 489
- DE-A- 19 533 741
- DE-A- 19 732 792
- US-A- 3 916 496
- US-A- 5 096 400

## Beschreibung

Die vorliegende Erfindung bezieht sich auf ein Druckventil, insbesondere für eine Kolbenpumpe zur Druckmittelförderung in schlupfgeregelten hydraulischen Bremsanlagen, nach dem Oberbegriff des Patentanspruchs 1.

Ein derartiges Druckventil ist in der DE 44 07 978 A1 offenbart. Das in dieser Druckschrift offenbarte Druckventil ist Teil einer Hydraulikpumpe, die zur Druckmittelförderung in hydraulischen Bremsanlagen dient. Die Hydraulikpumpe weist neben dem Druckventil ein Saugventil und einen Pumpkolben auf. Die Funktion der Hydraulikpumpe besteht darin, mittels des Kolbens bei Bedarf Bremsflüssigkeit in den Bremskreis zu fördern. Die Druck- und Saugventile werden durch den Druck gesteuert. Die Hubbewegung des Pumpkolbens wird üblicherweise von einem auf der Antriebswelle eines Elektromotors angeordnetem Exzenter erzeugt.

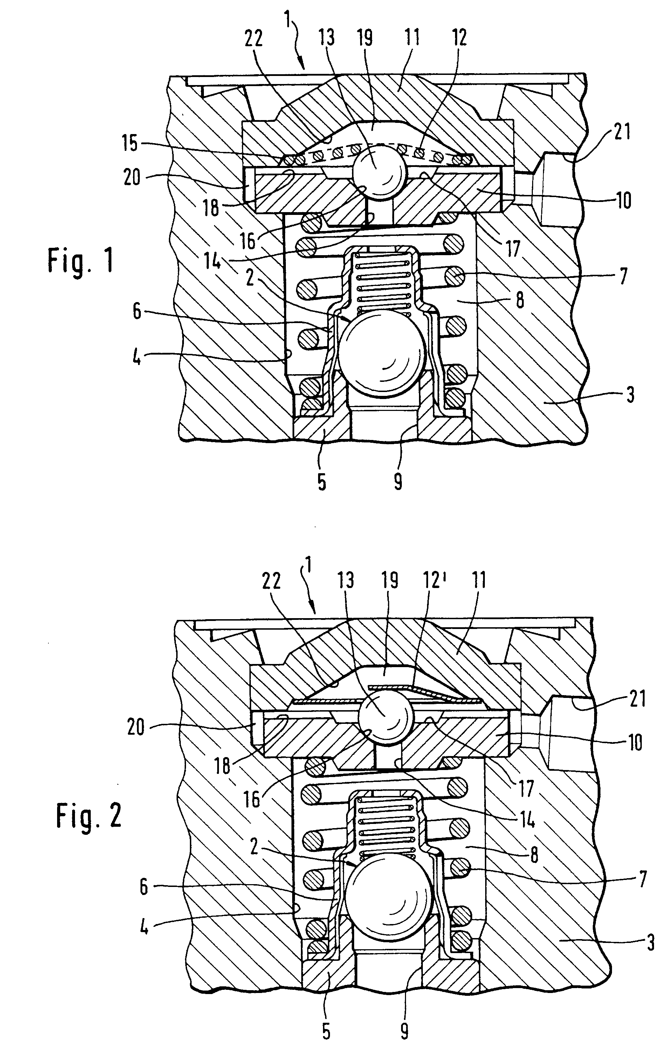

Das Druckventil gemäß diesem Stand der Technik wird durch ein als Schraubverschluß ausgeführtes Druckstück in das Pumpengehäuse eingeschraubt (vgl. Fig. 2 sowie Spalte 4, Zeilen 17 bis 21). Die Verbindung von Ventilsitzkörper und Druckstück bzw. Ventildeckelkörper erfolgt mittels Verstemmen. Diese bekannte Art der Ausbildung macht eine Herstellung des Druckventils durch spanende Verfahren, wie z.B. Drehen oder Fräsen, erforderlich. Dies bedeutet neben hohen Herstellungskosten und Toleranzanforderungen auch den Nachteil, daß bei spanend hergestellten Bauteilen, insbesondere bei spanend hergestellten Ventilen, Späne in den Bremskreislauf gelangen können, wodurch die Funktionsfähigkeit der Bremsanlage und damit die Fahrzeugsicherheit beeinträchtigt werden kann. Ferner ist bei dem bekannten Druckventil nachteilig, daß die als Schraubverbindung ausgeführte Verbindung des Druckventils mit dem Pumpengehäuse nach dem Einbau gelöst werden kann, wodurch Manipulationen an der Bremsanlage durch Unbefugte möglich sind.

Die Aufgabe der vorliegenden Erfindung besteht daher darin, die Nachteile des Standes der Technik zu vermeiden, und insbesondere ein Ventil bzw. Druckventil zu schaffen, das in der Herstellung kostengünstig ist, einfach eingebaut werden kann und besonders funktionssicher ist.

Diese Aufgabe wird bei einem Druckventil der eingangs genannten Art erfindungsgemäß dadurch gelöst, daß der Ventilsitz und/oder die Ventildeckelkörper spanlos hergestellt sind. Vorzugsweise ist dabei der Ventilsitzkörper und/oder der Ventildeckelkörper des Druckventils durch Urformen, Umformen, Stanzen, Prägen oder dergleichen hergestellt.

Gemäß einer bevorzugten Ausgestaltung der Erfindung ist das Druckventil im Pumpengehäuse verstemmt. Diese Art der Befestigung des Druckventils ermöglicht eine gegen Manipulation gesicherte und druckfeste Verbindung des Druckventils mit dem Gehäuse. Im Zusammenhang mit einem spanlos gefertigte Einzelteile aufweisenden Druckventil ist diese Art der Befestigung besonders vorteilhaft, da ein Verstemmen des Druckventils auch dann möglich ist, wenn beispielsweise der Ventildeckel kein Gewinde zur Befestigung im Pumpengehäuse bzw. Ventilblock aufweist.

In einer bevorzugten Ausführungsform der vorliegenden Erfindung ist das Druckventil als eigenständig handhabbare Montagebaugruppe ausgebildet. Dies hat den Vorteil, daß der Einbau des Druckventils in eine Hydraulikpumpe vereinfacht wird und das Druckventil vor dem Einbau extern und separat geprüft werden kann.

Zur Verbindung von Ventilsitzkörper und Ventildeckelkörper ist gemäß einem möglichen Ausführungsbeispiel eine Klebeverbindung vorgesehen. Der dabei verwendete Klebstoff ist vorzugsweise ein mikroverkapselter Klebstoff, der nicht gegen die Bremsflüssigkeit beständig sein muß, da die Verbindung von Ventilsitzkörper und Ventildeckelkörper nur als Montagehilfe und während einer dem Einbau vorangehenden Prüfphase erforderlich ist.

Gemäß einer weiteren Ausführungsform weist das Druckventil zur Verbindung von Ventilsitzkörper und Ventildeckelkörper eine Verbindungsvorrichtung auf. Vorzugsweise ist die Verbindungsvorrichtung ein Federtopf, in dem die Feder geführt ist, wobei der Federtopf zur Verbindung des Ventilinnenraums mit einem Druckmittelverbraucher vorzugsweise wenigstens eine Öffnung aufweist.

Gemäß einer weiteren bevorzugten Ausführungsform der vorliegenden Erfindung ist die Verbindung zwischen Ventilsitzkörper und Ventildeckelkörper selbsthemmend ausgebildet. Dies wird vorzugsweise durch sich kontaktierende, abgeschrägte Flächen realisiert.

Vorteilhafterweise weisen der Ventilsitzkörper und/oder der Ventildeckelkörper zur Verbindung des Ventilinnenraums mit einem Druckmittelverbraucher wenigstens eine erste Öffnung auf. Mit besonderem Vorteil können der Ventilsitzkörper und/oder der Ventildeckelkörper eine weitere Öffnung zur Steuerung der resultierenden Kugelkraft aufweisen.

Die Erfindung sowie weitere Vorteile und Ausgestaltungen derselben wird bzw. werden nachfolgend unter Bezugnahme auf die Zeichnungen näher erläutert. Dieselben oder ähnliche Bezugszeichen in den Zeichnungen bezeichnen die gleichen oder entsprechende Elemente. In den Zeichnungen zeigen:
- Fig. 1: einen Längsschnitt durch ein erstes Ausführungsbeispiels eines erfindungsgemäßen Druckventils;
- Fig. 2: eine Schnittsansicht eines zweiten Ausführungsbeispiels eines erfindungsgemäßen Druckventils;
- Fig. 3: eine Längsschnittsansicht eines dritten Ausführungsbeispiels eines erfindungsgemäßen Druckventils;
- Fig. 4: eine Schnittsansicht eines vierten Ausführungsbeispiels eines erfindungsgemäßen Druckventils;
- Fig. 5: eine Längsschnittsansicht eines fünften Ausführungsbeispiels eines erfindungsgemäßen Druckventils;
- Fig. 6: eine weitere Schnittsansicht eines sechsten Ausführungsbeispiels eines erfindungsgemäßen Druckventils;
- Fig. 7: eine Längsschnittsansicht eines siebten Ausführungsbeispiels eines erfindungsgemäßen Druckventils; und
- Fig. 8: eine Schnittansicht des in Fig. 7 dargestellten siebten Ausführungsbeispiels entlang der strichpunktierten Linie VIII-VIII.

In Fig. 1 ist eine Schnittsansicht eines ersten Ausführungsbeispiels eines erfindungsgemäßen Druckventils 1, insbesondere einer Hydraulikpumpe gezeigt. Die Hydraulikpumpe dient insbesondere zur Verwendung in einer ABS (Anti-Blockier-System), ASR (Antriebs-Schlupf-Regelung) oder ASMS (Automatisches Stabilitäts-Management-System) bzw. ESP (Elektronisches Stabilitäts-Programm) - Anlage einer geregelten Fahrzeugbremse. Dem Druckventil 1 ist ein Saugventil 2 koaxial vorgeschaltet. Das Druckventil 1 und das Saugventil 2 sind in dem Ventilblock bzw. Pumpengehäuse 3 angeordnet. Man entnimmt der Darstellung in Fig. 1, daß das vorzugsweise als eigenständig handhabbare Montageeinheit ausgebildete Druckventil 1 in dem Pumpengehäuse 3 verstemmt ist. Das Saugventil 2 ist in einer Laufbohrung 4 des Pumpengehäuses 3 angeordnet. Die Laufbohrung 4 wird von dem Druckventil 1 nach außen druckdicht und nicht ohne Zerstörung demontierbar verschlossen. In der Laufbohrung 4 wird ein Pumpenkolben 5 von einer (nicht dargestellten) Antriebswelle über einen ebenfalls nicht dargestellten Exzenter hin - und herbewegt. Das Saugventil 2 ist mittels eines Haltekäfigs 6 am Kolben 5 gefesselt. Zwischen einem umgebogenen Endabschnitt des Haltekäfigs 6 und dem Druckventil 3 ist eine Rückstellfeder 7 im Druckraum 8 angeordnet. Das Saugventil 2 liegt an einem im Pumpkolben 5 ausgebildeten Saugkanal 9 an.

Das im wesentlichen rotationssymmetrisch ausgebildete Druckventil 1 weist einen Ventilsitzkörper 10, einen Ventildeckel, körper 11 und eine dazwischen angeordnete Feder 12 auf. Der Ventilsitzkörper 10 und der Ventildeckelkörper 11 sind vorzugsweise Stanz - und/oder Prägeteile. Die Feder 12 ist in diesem Ausführungsbeispiel eine im wesentlichen planare Spiralfeder, die eine Kugel bzw. ein Ventilelement 13 gegen eine zentrale Bohrung 14 im Ventilsitzkörper 10 drückt. An ihrer Außenseite ist die Feder 12 in einer ringförmigen Ausnehmung 15 im Ventildeckelkörper 11 zwischen Ventildeckelkörper 11 und Ventilsitzkörper 10 gehalten. Die Feder 12 ist im unbelasteten Zustand nahezu eben und damit ungerichtet montierbar. Ferner wird durch diese Ausbildung der Feder 12 das Druckventil 1 besonders flachbauend. Der Ventilsitz wird durch eine sich an die zentrale Bohrung 14 anschließende und konzentrisch dazu ausgebildete konische Ausnehmung 16 gebildet. Der Durchmesser der Bohrung 14 entspricht etwa dem Radius der Kugel 13. Der Außendurchmesser der Ausnehmung bzw. des Ventilsitzes 16 ist etwas größer als der Durchmesser der Kugel 13 ausgebildet. Um die Ausnehmung 16 ist eine flache Ausnehmung 17 in dem Ventilsitzkörper 10 ausgebildet. Von der flachen Ausnehmung 17 verlaufen in den Ventilsitz 10 eingeprägte Nuten bzw. Öffnungen 18 radial nach außen, um Flüssigkeit aus dem zwischen Ventildeckelkörper 11 und Ventilsitzkörper 10 gebildeten Raum 19 herauszuleiten. Die Nuten 18 stehen mit einem, von der Innenwand des Pumpengehäuses 3, dem Außenumfang des Ventilsitzkörpers 10 und einem den Ventilsitzkörper 10 radial überragenden Abschnitt des Ventildeckelkörpers 11 gebildeten Ringraum 20 in Verbindung. Der Ringraum 20 steht seinerseits mit einem Kanal 21 in Verbindung, der zu einem Druckmittelverbraucher, beispielsweise den Radbremsen einer hydraulisch geregelten Bremsanlage, führt. Der Raum 19 wird durch eine kuppelförmige Ausbuchtung 22 auf der dem Ventilsitzkörper 10 zugewandten Seite des Ventildeckelkörpers 11 gebildet, die durch die konkave Verformung, z. B. durch Prägen, des Ventildeckelkörpers 11 erreicht wird. Der Darstellung in Fig. 1 kann man entnehmen, daß die Dicke des Ventilsitzkörpers 10 und die Dicke des Ventildeckelkörpers 11 im wesentlichen konstant ist, was insbesondere bei der spanlosen Herstellung von Vorteil ist. Der Ventilsitz - bzw. Ventildekkelkörper 10 bzw. 11 kann so einfach aus einem Blech oder dergleichen hergestellt sein.

Im Betrieb wird während einer Druckhub-Phase mittels einer, von einer Hubbewegung des Kolbens 5 resultierenden Druckerhöhung im Druckraum 8 das Druckventil 1 gegen die Vorspannung der Feder 12 geöffnet, und der Druck bzw. Bremsflüssigkeit wird über die Nuten 18, den Ringkanal 20 und den Kanal 21 zu einem Druckmittelverbraucher, z. B. zu den Radbremsen, übertragen.

Bei dem in Fig. 2 dargestellten, zweiten Ausführungsbeispiel eines erfindungsgemäßen Druckventils ist anstelle der Feder 12 ein dünnes Blech 12', das auch als Blattfeder bezeichnet werden kann, vorgesehen. Eine aus dem Blech 12' gestanzte Lasche drückt die Kugel 13 gegen den Ventilsitz 16. Ebenso wie die Verwendung der im unbelasteten Zustand planaren Feder 12 sorgt die Verwendung des Stanzblechs 12' für eine besonders flache Bauform.

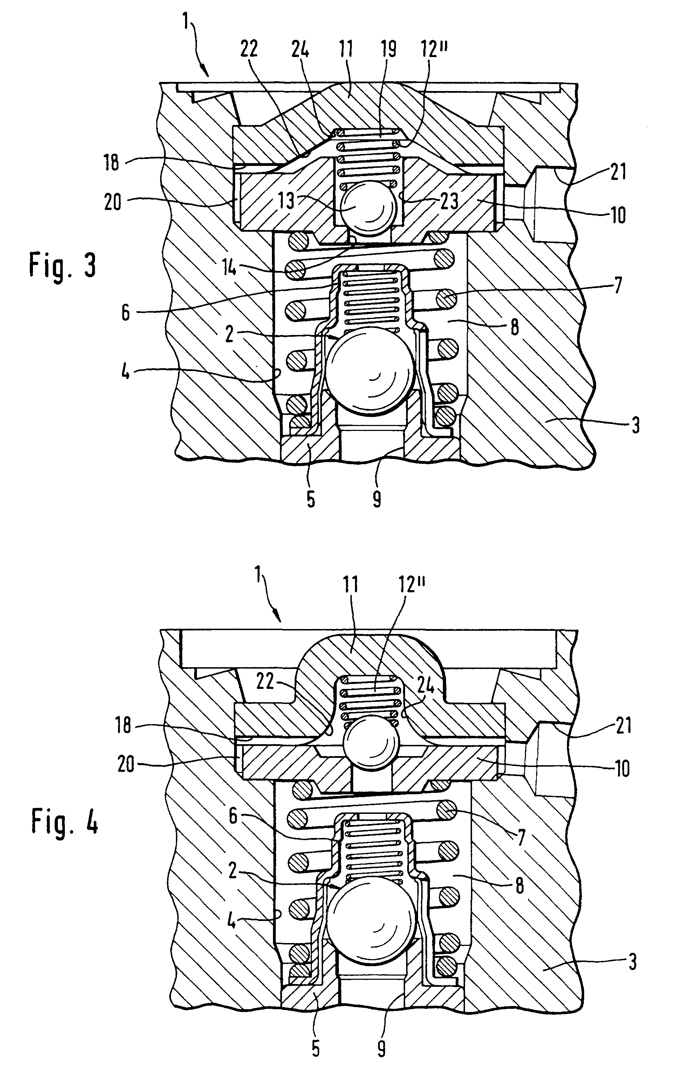

Bei dem dritten erfindungsgemäßen Druckventil 1 gemäß Fig. 3 ist anstelle der Spiralfeder 12 (vgl. Fig. 1) eine Schraubenfeder 12'' vorgesehen. Dabei ist die Schraubenfeder 12'' im Ventilsitzkörper 10 geführt. Dazu weist der Ventilsitzkörper 10 anstelle der konischen Ausnehmung 16 (vgl. Fig. 1 und 2) eine Ausnehmung 23 auf, in deren Bodenabschnitt sich die Kugel 13 befindet. Der Durchmesser der Bohrung 23 ist etwas größer als der Durchmesser der Kugel 13 und der Schraubenfeder 12''. Der Ventilsitzkörper 11 ist an einem radial inneren, die Ausnehmung 23 aufweisenden Abschnitt dicker als an seinem Rand ausgebildet, damit ein zur Führung der Feder 12'' ausreichender Abschnitt der Feder 12'' und die Kugel 13 darin aufgenommen werden können. Ein dem Ventildeckelkörper 11 zugewandter oberer Abschnitt der Bohrung 23 dient oberhalb der Kugel 13 zur Führung eines Endabschnitts der Schraubenfeder 12''. Der diesem Endabschnitt gegenüberliegende Endabschnitt der Schraubendruckfeder ist in einem stufenartigen Abschnitt 24 im Ventildeckelkörper 11 gelagert. Die Ausnehmung 23 und der Abschnitt 24 besitzen ungefähr denselben Durchmesser und sind einander zugewandt und koaxial zueinander angeordnet. Bei dem Ausführungsbeispiel gemäß Fig. 3 sind die Nuten oder Öffnungen 18 anstelle in dem Ventilsitzkörper 10 in einem Randabschnitt des Ventildeckelkörpers 11 ausgebildet.

Fig. 4 zeigt ein viertes Ausführungsbeispiel der vorliegenden Erfindung. Im Unterschied zu dem in Fig. 3 gezeigten Ausführungsbeispiel ist in diesem Fall die Schraubenfeder 12'' im Ventildeckelkörper 11 geführt. Anstelle der Ausnehmung 23 im Ventilsitzkörper 10 weist die Ausbuchtung 22 im Ventildeckel, körper 11 einen eingeprägten, im wesentlichen topfförmigen Abschnitt 24 auf, in dem ein der Kugel 13 gegenüberliegender Endabschnitt der Feder 12'' geführt ist. Bei dem Ausführungsbeispiel gemäß Fig. 4 sind die Nuten 18 anstatt in dem Ventilsitzkörper 10 in einem Randabschnitt des Ventildeckelkörpers 11 ausgebildet.

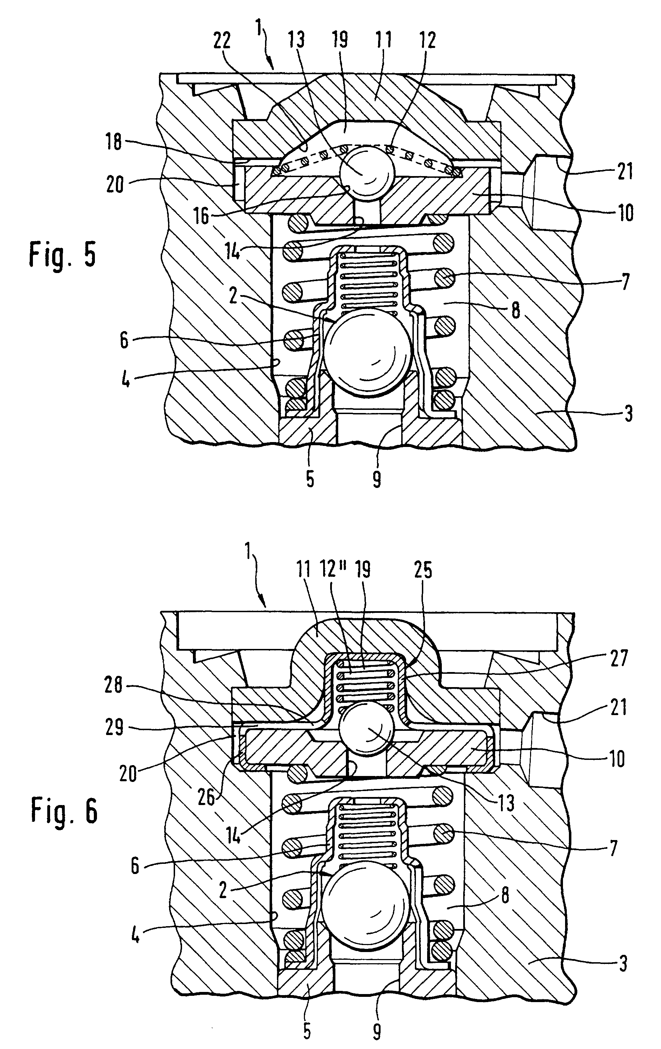

Das in Fig. 5 gezeigte fünfte Ausführungsbeispiel eines erfindungsgemäßen Druckventils 1 ist im allgemeinen dem in Fig. 1 gezeigten Ausführungsbeispiel ähnlich, aber unterscheidet sich im wesentlichen dadurch, daß die Feder 12 beispielsweise durch Verstemmen an dem Ventilsitzkörper 10 gefesselt ist. Dies ist in Fig. 5 schematisch dargestellt. Wie bei den Ausführungsbeispielen gemäß Fig. 3 und 4 sind die Nuten 18 in dem Ventilsitzkörper 11 ausgebildet.

Das Druckventil 1 ist aufgrund der Wirkung der Kolbenrückstellfeder 7 vorzugsweise als eigenständig handhabbare Montageeinheit ausgebildet. Dazu sind bei dem erfindungsgemäßen Druckventil 1 gemäß den Ausführungsbeispielen der Fig. 1 bis 5 der Ventilsitzkörper 10 und der Ventildeckelkörper 11 an den zugewandten ringförmigen Außenabschnitten beispielsweise durch eine Schweißverbindung oder eine Haft- bzw. Klebeverbindung miteinander befestigt. In letzterem Fall kann ein mikroverkapselter Klebstoff verwendet werden, der erst beim Aneinanderpressen von Ventilsitzkörper 10 und Ventildeckelkörper 11 aktiv wird. Der Klebstoff muß dabei nicht gegen die Bremsflüssigkeit beständig sein, da das Druckventil 1 nur als Montagehilfe eine Einheit bilden muß.

Fig. 6 zeigt ein sechstes Ausführungsbeispiel der vorliegenden Erfindung. Zur Verbindung von Ventilsitzkörper 10 und Ventildeckelkörper 11 ist ein zusätzliches Halteelement, ein als Verbindungsvorrichtung ausgebildeter Federtopf 25, vorgesehen. Die Verbindung des Ventildeckelkörpers 11 mit dem Ventilsitzkörper 10 erfolgt daher bei diesem Ausführungsbeispiel nicht temporär wie bei der oben beispielhaft erläuterten Klebeverbindung, sondern ist vielmehr permanent. Der Federtopf 25 ist im Ventildeckelkörper 11 durch eine Preßpassung oder dergleichen befestigt. Zur Befestigung des Federtopfs 25 an dem Ventilsitzkörper 10 ist dessen Endabschnitt 26 um den Ventilsitzkörper 10 herum gebördelt. Der Federtopf 25 weist einen im Querschnitt im wesentlichen U-förmigen Bodenbereich 27 auf, in dem die Schraubenfeder 12'' geführt ist. An den Bodenbereich 27 schließt sich ein horizontaler, parallel zum Ventilsitzkörper 10 verlaufender Mittelabschnitt 28 an. Anstelle der Nuten 18, die bei den in Fig. 1 bis 5 gezeigten Ausführungsformen in dem Ventilsitzkörper 10 oder dem Ventildeckelkörper 11 ausgebildet sind, weist der Federtopf 25 in seinem Mittelabschnitt 28 gestanzte Öffnungen bzw. Aussparungen 29 auf, die zur Verbindung des Raums 19 mit dem Kanal 21 dienen.

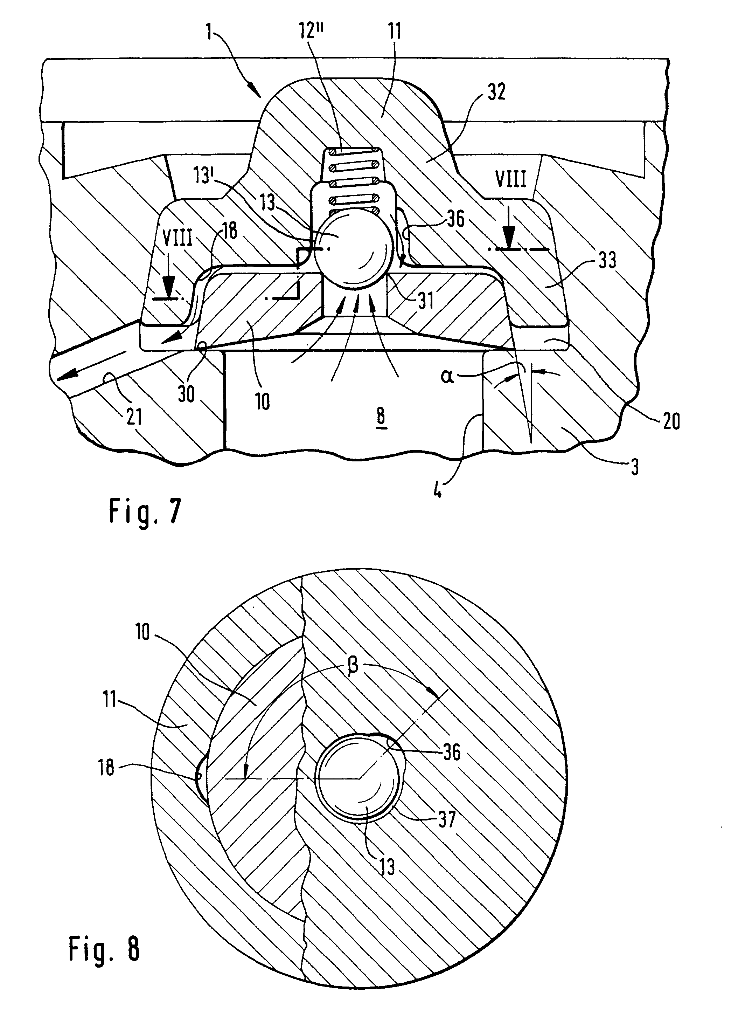

In Verbindung mit den Fig. 7 und 8 wird im folgenden ein siebtes Ausführungsbeispiel der vorliegenden Erfindung beschrieben. Dabei zeigt Fig. 7 eine Schnittsansicht eines erfindungsgemäßen Druckventils 1 und Fig. 8 eine Schnittansicht entlang der Linie VIII-VIII in Fig. 7. Das Druckventil 1 weist einen Ventilsitzkörper 10, der vorzugsweise als Ventilplatte aus Stahl gebildet ist, und einen Ventildeckelkörper 11 auf, der vorzugsweise ein Prägeteil aus Aluminium ist. Der Ventilsitzkörper 10 weist an seiner dem Druckraum 8 zugewandten Seite am Rand umfangsmäßig eine Dichtkante 30 auf. Ferner weist der Ventilsitzkörper 10 einen Ventilsitz 31 auf. Durch eine insbesondere scharfkantige Ausbildung des Ventilsitzes 31 wird erreicht, daß beim Öffnen des Druckventils 1 sofort nach Durchströmen des engsten Querschnitts, die Bremsflüssigkeit seitlich abströmen kann, und somit ein Umströmen der Kugel 13 durch die (Brems-)Flüssigkeit nicht erforderlich ist. Entlang des Außenumfangs des Ventilsitzkörpers 10 ist dieser mit einem Winkel α abgeschrägt. Der Ventildeckelkörper 11 weist einen radial inneren, im Querschnitt U-förmigen Innenabschnitt 32, und eine radial äußeren, im Querschnitt ebenfalls U-förmigen Außenabschnitt 33 auf. Der Innendurchmesser des Innenabschnitts 32, der insbesondere zur Stabilisierung der Kugel 13 und zur Führung der Schraubenfeder 12'' dient, entspricht im wesentlichen dem Durchmesser der Kugel 13. Dadurch wird die Kugel 13, insbesondere in deren Äquatorbereich 13', eng und präzise, d. h. mit geringem Spiel, geführt, wodurch ein "Tanzen" der Kugel 13, wie es durch Strömungsablösungen vorkommen kann, vermieden wird. Der Innendurchmesser des Außenabschnitts 33 entspricht im wesentlichen dem Außendurchmesser des Ventilsitzkörpers 10. Der Außenabschnitt 33 umgreift den Ventilsitzkörper 10 und ist an seiner Innenseite ebenfalls etwa um einen Winkel α abgeschrägt. Der Winkel α ist dabei kleiner als ein kritischer Winkel der Selbsthemmung, wodurch beide Bauteile 10, 11 von selbst zusammenhalten und das Druckventil 1 als vormontierte, eigenständige Baugruppe gehandhabt und geprüft werden kann. Es sei bemerkt, daß sowohl der Ventilsitzkörper 10 als auch der Ventildeckelkörper 11 in einer Aufspannung gefertigt werden können.

Eine im Außenabschnitt 33 des Ventildeckelkörpers 11 ausgebildete Nut 18, die auch als Abströmöffnung bezeichnet werden kann, dient zur Verbindung des Raums 19 mit dem Ringraum 20 und dem Kanal 21. Ferner ist in dem Außenabschnitt 33 des Ventildeckelkörpers 11 mit Vorteil eine geprägte Zusatzöffnung 36 ausgebildet. Der Darstellung gemäß Fig. 8 entnimmt man, daß die Nut 18 und die Zusatzöffnung 36 an der Innenseite des Außenabschnitts 33 in einem Winkel β zueinander ausgebildet sind. Beim Öffnen des Druckventils 1 strömt die Bremsflüssigkeit aus dem Raum 19 um die Kugel 13 herum durch die Zusatzöffnung 36, wie durch die Pfeile in Fig. 7 angedeutet ist. Darüber hinaus wird ein ebenso großer Volumenanteil an Bremsflüssigkeit durch den, aus Toleranzgründen um die Kugel 13 angeordneten Ringspalt 37 aus dem Raum 19 verdrängt. Durch Vorgabe des Winkels β kann daher die resultierende Kraft auf die Kugel 13 beeinflußt, und somit eine bevorzugte Anlagefläche der Kugel 13 bestimmt werden.

Das Ausführungsbeispiel gemäß den Fig. 7 und 8 zeichnet sich durch eine besondere, baulich bedingte Geräuschreduzierung aus. Das Druckventil 1 wird vormontiert und bildet durch die selbsthemmende Ausbildung auch im Betrieb eine Einheit. Die Montage des Druckventils in das Pumpengehäuse 3 erfolgt in zwei Schritten. In einem ersten Schritt wird das Druckventil 1 im Bereich des Ventilsitzkörpers 10 angepreßt, um für eine dichte Verbindung zu sorgen. Anschließend wird außen am Druckventil 1 ein Prüfkopf aufgebracht, der zur Überprüfung des Ventils 1 bei einem Pumpentestlauf dient. Eine außerhalb des Pumpengehäuses 3 liegende Dichtebene des Prüfkopfs sorgt dabei für die zum Betrieb des Druckventils 1 nötige Abdichtung. Schließlich wird nach erfolgreichem Testverlauf das Druckventil 1 unter Beibehaltung der ursprünglichen Test-Position verstemmt, und ist damit druckdicht und nicht demontierbar im Ventilblock befestigt.

### Bezugszeichenliste

- 1: Druckventil
- 2: Saugventil
- 3: Pumpengehäuse
- 4: Laufbohrung
- 5: Pumpkolben
- 6: Haltekäfig
- 7: Rückstellfeder
- 8: Druckraum
- 9: Saugkanal
- 10: Ventilsitzkörper
- 11: Ventildeckelkörper
- 12: Feder
- 12': Stanzblech
- 12'': Schraubenfeder
- 13: Kugel bzw. Ventilelement
- 14: Bohrung
- 15: Ausnehmung
- 16: Ventilsitz
- 17: Ausnehmung
- 18: Öffnung bzw. Nut
- 19: Raum
- 20: Ringraum
- 21: Druckkanal
- 22: Ausbuchtung
- 23: Ausnehmung
- 24: Abschnitt
- 25: Federtopf bzw. Verbindungsvorrichtung
- 26: Endabschnitt
- 27: Bodenbereich
- 28: Mittelabschnitt
- 29: Öffnung bzw. Aussparung
- 30: Dichtkante
- 31: Ventilsitz
- 32: Innenabschnitt
- 33: Außenabschnitt
- 36: Zusatzöffnung
- 37: Ringspalt

## Patentansprüche

1. Druckventil (1), insbesondere für eine Kolbenpumpe zur Druckmittelförderung in schlupfgeregelten hydraulischen Bremsanlagen, wobei das Druckventil (1) einen Ventilsitzkörper (10) und einen Ventildeckelkörper (11) aufweist, und wobei in dem zwischen dem Ventilsitzkörper (10) und dem Ventildeckelkörper (11) gebildeten Raum (19) ein Vorspannelement (12,12',12'') und ein Ventilelement (13) vorgesehen sind, **dadurch gekennzeichnet, daß** das Druckventil (1) im Pumpengehäuse (3) verstemmt ist, wobei der Ventilsitzkörper (10) und/oder der Ventildeckelkörper (11) spanlos hergestellt sind.

2. Druckventil (1) nach Anspruch 1, **dadurch gekennzeichnet, da**ß der Ventilaitzkörper (10) und/oder der Ventildeckelkörper (11) des Druckventils (1) durch Urformen, Umformen, Stanzen oder Prägen hergestellt sind.

3. Druckventil (1) nach einem der vorhergehenden Ansprüche, **dadurch gekennzeichnet, daß** das Druckventil (1) als eigenständig handhabbare Montagebaugruppe ausgebildet ist.

4. Druckventil (1) nach Anspruch 3, **dadurch gekennzeichnet, daß** zur Verbindung von Ventilsitzkörper (10) und Ventildeckelkörper (11) eine Klebeverbindung vorgesehen ist.

5. Druckventil (1) nach Anspruch 3, **dadurch gekennzeichnet, daß** das Druckventil (1) zur Verbindung von Ventilsitzkörper (10) und Ventildeckelkörper (11) eine Verbindungsvorrichtung (25) aufweist,

6. Druckventil (1) nach Anspruch. 5, **dadurch gekennzeichnet, daß** die Verbindungsvorrichtung (25) zur Verbindung des Raums (19) mit einem Druckmittelverbraucher wenigstens eine Öffnung (29) aufweist.

7. Druckventil (1) nach Anspruch 3, **dadurch gekennzeichnet, daß** die Verbindung zwischen Ventilsitzkörper (10) und Ventildeckelkörper (11) selbsthemmend ist.

8. Druckventil (1) nach einem der vorhergehenden Ansprüche, **dadurch gekennzeichnet, daß** der Ventilsitzkörper (10) und/oder der Ventildeckelkörper (11) zur Verbindung des Raums (19) mit einem Druckmittelverbraucher wenigstens eine erste Öffnung (18, 29) aufweisen.

9. Druckventil (1) nach Anspruch B, **dadurch gekennzeichnet, daß** der Ventilsitzkörper (10) und/oder der Ventildeckel körper (11) eine zweite Öffnung (36) zur Steuerung der resultierenden Kugelkraft aufweisen.

## Claims

1. Pressure valve (1), particularly for a piston pump for conveying pressure fluid in slip-controlled hydraulic brake systems, wherein the pressure valve (1) has a valve seat body (10) and a valve cover body (11), and wherein in the space (19) formed between the valve seat body (10) and the valve cover body (11) there is a pre-tension element (12, 12', 12'') and a valve element (13), **characterized in that** the pressure valve (1) is caulked into the pump housing (3), with the valve seat body (10) and/or the valve cover body (11) being manufactured by non-cutting method.

2. Pressure valve (1) according to claim 1, **characterized in that** the valve seat body (10) and/or the valve cover body (11) of the pressure valve (1) are manufactured by forming, re-forming, punching or stamping.

3. Pressure valve (1) according to any one of the aforementioned claims, **characterized in that** the pressure valve (1) is designed as a separate sub-assembly suitable for handling.

4. Pressure valve (1) according to claim 3, **characterized in that** a glue connection is foreseen for the connection between the valve seat body (10) and the valve cover body (11).

5. Pressure valve (1) according to claim 3, **characterized in that** the pressure valve (1) has a connecting device (25) for connection of the valve seat body (10) to the valve cover body (11).

6. Pressure valve (1) according to claim 5, **characterized in that** the connecting device (25) has at least one opening (29) for connecting the space (19) with a pressure fluid consumer.

7. Pressure valve (1) according to claim 3, **characterized in that** the connection between the valve seat body (10) and the valve cover body (11) is self-locking,

8. Pressure valve (1) according to any one of the aforementioned claims, **characterized in that** the valve seat body (10) and/or the valve cover body (11) have at least one initial opening (18, 29) for connecting the space (19) with a pressure fluid consumer.

9. Pressure valve (1) according to claim 8, **characterized in that** the valve seat body (10) and/or the valve cover body (11) have a second opening (36) for controlling the resulting ball force.

## Revendications

1. Valve de refoulement (1), notamment pour une pompe à piston servant à la mise en circulation d'agent de pression un dispositif de freinage hydraulique à régulation du glissement, la valve de refoulement (1) comprenant un corps de siège de valve (10) et un corps de couvercle de valve (11), tandis qu'un élément de précontrainte (12, 12', 12") et un élément de valve (13) sont prévus dans l'espace (19) formé entre le corps de siège de valve (10) et le corps de couvercle de valve (11), **caractérisée en ce que** la valve de refoulement (1) est fixée par matage dans le boîtier de pompe (3), le corps de siège de valve (10) et/ou le corps de couvercle de valve (11) étant réalisés sans enlèvement de copeaux.

2. Valve de refoulement (1) suivant la revendication 1, **caractérisée en ce que** le corps de siège de valve (10) et/ou le corps de couvercle de valve (11) de la valve de refoulement (1) sont réalisés par formage primaire, déformation, découpage ou emboutissage.

3. Valve de refoulement (1) suivant l'une des revendications précédentes, **caractérisée en ce que** la valve de refoulement (1) est réalisée sous forme d'un groupe structurel de montage pouvant être manipulé en propre.

4. Valve de refoulement (1) suivant la revendication 3, **caractérisée en ce que**, pour la liaison du corps de siège de valve (10) et du corps de couvercle de valve (11), il est prévu une liaison adhésive.

5. Valve de refoulement (1) suivant la revendication 3, **caractérisée en ce que** la valve de refoulement (1) comprend, pour la liaison du corps de siège de valve (10) et du corps de couvercle de valve (11), un dispositif de liaison (25).

6. Valve de refoulement (1) suivant la revendication 5, **caractérisée en ce que** le dispositif de liaison (25) comprend au moins une ouverture (29) pour la liaison de l'espace (19) avec un utilisateur d'agent de pression.

7. Valve de refoulement (1) suivant la revendication 3, **caractérisée en ce que** la liaison entre le corps de siège de valve (10) et le corps de couvercle de valve (11) est autobloquante.

8. Valve de refoulement (1) suivant l'une des revendications précédentes, **caractérisée en ce que** le corps de siège de valve (10) et/ou le corps de couvercle de valve (11) comprennent au moins une première ouverture (18, 29) pour la liaison de l'espace (19) avec un utilisateur d'agent de pression.

9. Valve de refoulement (1) suivant la revendication 8, **caractérisée en ce que** le corps de siège de valve (10) et/ou le corps de couvercle de valve (11) comprennent une seconde ouverture (36) pour la commande de la force de bille résultante.
